# FASCICULE DE BREVET EUROPEEN

(11) **EP 0 478 407 B1**
(45) Date de publication et mention de la délivrance du brevet: **11.05.1994**
(21) Numéro de dépôt: 91402337.9
(22) Date de dépôt: 30.08.1991
(51) Int. Cl.: B01D 17/032

(54) **Récupérateur d'hydrocarbures**
Vorrichtung zur Rückgewinnung von Kohlenwasserstoffen
Recuperator for hydrocarbons

(30) Priorité: 31.08.1990 FR 9010909
(43) Date de publication de la demande: 01.04.1992
(73) Titulaire: ELF AQUITAINE PRODUCTION, 92400 Courbevoie (FR)
(72) Inventeur: Bronnec, Jean, F-29000 Brest (FR); Gaudebert, Bertrand, F-64300 Orthez (FR); Le Roux, Jean-Claude, F-29800 Plouven (FR); Vidalie, Jean-François, F-91440 Bures S/Yvette (FR); Thery, Jean-Pierre, F-78150 Le Chesnay (FR); Des Vallieres, Thierry, F-92100 Boulogne (FR)
(74) Mandataire: Timoney, Ian Charles Craig

(56) Documents cités:
- DE-A- 2 703 210
- FR-A- 2 114 382
- US-A- 3 617 555

## Description

La présente invention se rapporte à un récupérateur d'hydrocarbures et, plus particulièrement à un tel récupérateur destiné à récupérer un hydrocarbure liquide d'un mélange eau-hydrocarbure.

Dans de nombreuses situations, par exemple des capacités verticales telles que les sump-caissons d'une plateforme pétrolière, on est confronté au problème d'eau contaminée par la présence d'un hydrocarbure liquide. Afin d'éviter toute pollution de la mer, il est nécessaire de séparer l'hydrocarbure liquide de l'eau avant de renvoyer l'eau dans la mer.

Il a déjà été proposé d'utiliser un récupérateur d'hydrocarbures pour récupérer l'hydrocarbure liquide de l'eau. En général, un tel récupérateur comprend une bande oléophile entraînée en mouvement à travers le mélange hydrocarbure/eau et des moyens, tels que des racleurs destinés à retirer l'hydrocarbure de la bande.

La quantité d'hydrocarbure retirée de la bande par des racleurs est nécessairement limitée. De plus, l'usage prolongé des racleurs peut mener à une détérioration mécanique de la bande oléophile.

Les documents Fr-A-2.114.382 et DE-A-2.703.210 décrivent chacun un appareil dans lequel une bande comportant des hydrocarbures à récupérer passe entre deux rouleaux presseurs qui, ensemble, retirent les hydrocarbures par une action d'essorage.

Le document US-A-3.617.555 décrit un récupérateur d'hydrocarbures qui comporte un rouleau, disposé en contact avec une bande de matériau oléophile qui est destinée à plonger dans un mélange à traiter. Le rouleau tourne à l'encontre de la direction de mouvement de la bande, à la même vitesse que celle-ci. L'utilisation d'un seul rouleau, tournant à la même vitesse que celle de la bande, ne permet pas une récupération optimum des hydrocarbures de la bande.

La présente invention a pour objet un récupérateur d'hydrocarbures qui assure une récupération optimum d'hydrocarbures de la bande oléophile et qui est de construction simple et de fiabilité accrue.

Pour ce faire, l'invention propose un récupérateur d'hydrocarbures destiné à être disposé au-dessus d'un réservoir contenant un mélange d'un liquide et d'un hydrocarbure liquide comprenant une bande de matériau oléophile adaptée à plonger dans ce mélange, et des moyens pour récupérer l'hydrocarbure liquide de la bande comprenant deux rouleaux disposés de part et d'autre de la bande, et s'étendant sur toute la largeur de la bande, caractérisé en ce que les moyens pour récupérer l'hydrocarbure liquide de la bande comprennent deux rouleaux oléophiles, les rouleaux étant disposés de façon à être mis en rotation en sens inverse à l'encontre de la direction de mouvement de la bande, à une vitesse périphérique supérieure à celle de la bande.

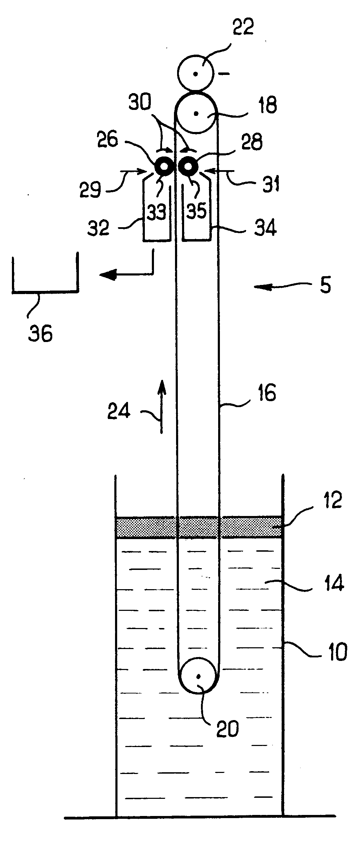

D'autres caractéristiques et avantages de la présente invention apparaîtront plus clairement à la lecture de la description ci-après faite en référence au dessin annexé sur lequel la figure unique est une vue schématique en coupe d'un récupérateur d'hydrocarbures selon l'invention.

Comme représenté sur la figure, un récupérateur d'hydrocarbures représenté généralement en 5 est disposé au-dessus d'un réservoir d'une capacité 10 qui contient un liquide à déshuiler, par exemple, un mélange d'eau 14 et d'un hydrocarbure liquide 12, notamment une huile lourde, surnageant à la surface de l'eau. Une bande sans fin 16 est disposée verticalement autour de deux rouleaux 18 et 20. La bande 16 est formée d'un matériau oléophile par exemple d'un polyester enduit de polyuréthane dont les surfaces externes opposées sont préalablement modifiées par ponçage. Un rouleau presseur 22 libre coopère avec le rouleau 18 qui est mis en rotation par un moteur (non représenté)pour entraîner la bande 16 en mouvement dans le sens indiqué par la flèche 24.

Lors de sa mise en mouvement, la bande 16 est guidée par des poulies guides et par des joues latérales usinées dans les rouleaux 18 et 20 (non représentées).

Le passage de la bande 16 à travers le liquide à déshuiler provoque la récupération d'huile sur les surfaces externes de celle-ci. Afin de récupérer l'huile de la bande 16, le récupérateur d'hydrocarbures comporte, selon l'invention, deux rouleaux oléophiles 26 et 28 disposés de part et d'autre de la bande 16 et s'étendant de manière parallèle sur toute la largeur de la bande 16. Les rouleaux oléophiles 26 et 28 sont mis en rotation en sens inverse, comme l'indiquent les flèches 30, par un moteur (non représenté), et tournent, donc, à l'encontre de la direction du mouvement de la bande 16. La vitesse périphérique des rouleaux oléophiles est supérieure de préférence 20 à 30 % à celle de la bande 16.

Les rouleaux oléophiles 26 et 28 sont appliqués sur la bande 16 dans le sens des flèches 29 et 31 par des ressorts (non-représentés) et compriment ainsi la bande 16. Deux racleurs règlables 33 et 35 sont disposés chacun en contact avec un rouleau oléophile 26, 28 et sont adaptés pour retirer l'huile de la surface des rouleaux. Deux goulottes 32 et 34, une associée à chaque rouleau oléophile 26, 28, sont disposées de part et d'autre de la bande 16. L'huile récupérée par les rouleaux oléophiles se déverse dans les goulottes 32 et 34 et est renvoyée vers un réservoir de stockage 36.

La présente invention permet d'avoir un récupérateur d'hydrocarbures qui est adapté pour être facilement installé au-dessus de tout type de réservoir ou capacité de liquide.

De plus, l'utilisation de rouleaux oléophiles permet de réduire l'usure de la bande oléophile, les racleurs agissant sur les rouleaux et non sur la bande.

## Revendications

1. Récupérateur d'hydrocarbures, destiné à être disposé au-dessus d'un réservoir (10) contenant un mélange d'un liquide et d'un hydrocarbure liquide, comprenant une bande (16) de matériau oléophile adaptée à plonger dans ce mélange, et des moyens (26, 28) pour récupérer l'hydrocarbure liquide de la bande (16) comprenant deux rouleaux (26, 28) disposés de part et d'autre de la bande, et s'étendant sur toute la largeur de la bande, caractérisé en ce que les moyens (26, 28) pour récupérer l'hydrocarbure liquide de la bande (16) comprennent deux rouleaux oléophiles (26, 28), les rouleaux (26, 28) étant disposés de façon à être mis en rotation en sens inverse à l'encontre de la direction de mouvement de la bande (16), à une vitesse périphérique supérieure à celle de la bande (16).

2. Récupérateur selon la revendication 1 caractérisé en ce que les rouleaux oléophiles sont disposés de façon à ce que leur vitesse périphérique soit entre 20 et 30 % supérieure à celle de la bande (16).

3. Récupérateur selon la revendication 1 ou 2 caractérisé en ce que les rouleaux oléophiles (26, 28) sont appliqués sur la bande (16) par des ressorts.

## Patentansprüche

1. Rückgewinnungseinrichtung für Kohlenwasserstoffe, die dazu bestimmt ist, über einem eine Mischung aus einer Flüssigkeit und einem flüssigem Kohlenwasserstoff enthaltenden Behälter (10) angebracht zu werden,
- mit einem Band (16) aus oleophilem Material, das dazu geeignet ist, in diese Mischung einzutauchen, und
- mit Einrichtungen (26, 28) zur Rückgewinnung des flüssigen Kohlenwasserstoffs von dem Band (16), die zwei Walzen (26, 28) aufweisen, welche auf beiden Seiten des Bands angeordnet sind und sich über die gesamte Breite des Bands erstrecken,
dadurch gekennzeichnet, daß die Einrichtungen (26, 28) zur Rückgewinnung des flüssigen Kohlenwasserstoffs von dem Band (16) zwei oleophile Walzen (26, 28) aufweisen, die so angeordnet sind, daß sie zueinander entgegengesetzt entgegen der Bewegungsrichtung des Bands (16) mit einer Umfangsgeschwindigkeit in Drehung versetzt werden, die höher als die des Bands (16) ist.

2. Rückgewinnungseinrichtung nach Anspruch 1, dadurch gekennzeichnet, daß die oleophilen Walzen so angeordnet sind, daß ihre Umfangsgeschwindigkeit zwischen 20 und 30 % höher als die des Bands (16) ist.

3. Rückgewinnungseinrichtung nach Anspruch 1 oder 2, dadurch gekennzeichnet, daß die oleophilen Walzen (26, 28) durch Federn an das Band (16) angedrückt werden.

## Claims

1. Recovery device for hydracarbons, which device is to be disposed above a reservoir (10) containing a mixture of a liquid and a liquid hydrocarbon, comprising a strip (16) of oil-absorbing material adapted for dipping into this mixture, and means (26, 28) for recovering the liquid hydrocarbon from the strip (16), which means comprise two rollers (26, 28) disposed on both sides of the strip (16) and extending over the entire width thereof, characterised in that the means (26, 28) for recovering the liquid hydrocarbon from the strip (16) comprise two oil-absorbing rollers (26, 28), the rollers (26, 28) being disposed in such a manner as to be rotated in the opposite direction to the direction of movement of the strip (16) at a peripheral speed which is greater than that of the strip (16).

2. Recovery device according to Claim 1, characterised in that the oil-absorbing rollers are disposed in such a manner that the peripheral speed thereof is between 20 and 30% greater than that of the strip (16).

3. Recovery device according to Claim 1 or Claim 2, characterised in that the oil-absorbing rollers (26, 28) are pressed against the strip (16) by means of springs.
